Europäisches Patentamt

European Patent Office

Office européen des brevets

(11) Numéro de publication : **0 014 654**
**B1**

(12) **FASCICULE DE BREVET EUROPÉEN**

(45) Date de publication du fascicule du brevet :
28.11.84

(51) Int. Cl.³ : **H 04 N 7/16, G 06 K 19/06**

(21) Numéro de dépôt : 80400171.7

(22) Date de dépôt : 04.02.80

(54) **Carte d'abonnement pour récepteur de vidéographie.**

(30) Priorité : 06.02.79 FR 7902996

(43) Date de publication de la demande :
20.08.80 Bulletin 80/17

(45) Mention de la délivrance du brevet :
28.11.84 Bulletin 84/48

(84) Etats contractants désignés :
**BE DE GB IT NL SE**

(56) Documents cités :
**FR-A- 2 184 926**
**FR-A- 2 311 360**
**US-A- 3 637 994**
**US-A- 4 081 832**

(73) Titulaire : **Etablissement Public de Diffusion dit**
**"Télédiffusion de France"**
**21-27 rue Barbès**
**F-92120 Montrouge (FR)**

**L'Etat Français représenté par le Secrétaire d'Etat**
**aux Postes et Télécommunications**
**(Centre National d'Etudes des Télécommunications)**
**38-40 rue du Général Leclerc**
**F-92131 Issy-les-Moulineaux (FR)**

(72) Inventeur : **Guillou, Louis Claude**
**7, rue de l'Ise**
**F-35230 Bourgbarre (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

**Description**

La présente invention a pour objet une carte d'abonnement pour récepteur de vidéographie.

Elle trouve une application dans la transmission et l'affichage d'informations sur des récepteurs de télévision à des fins quelconques de distraction, d'information ou d'enseignement. L'invention s'applique essentiellement au système dit « ANTIOPE » (Acquisition Numérique et Télévisualisation d'Images Organisées en Pages d'Ecriture), et au système dit « TITAN » (Terminal Interactif de Télétexte et Appel par Numérotation). On sait qu'il s'agit essentiellement, pour le premier, d'un système de vidéographie diffusée (donc unidirectionnelle) permettant d'insérer sur des voies de télévision des informations alphanumériques organisées en pages et en magazines, et, pour le second, d'un système de vidéographie interactive (donc bidirectionnelle) compatible avec le système ANTIOPE et permettant l'accès à des bases de données (informations générales, annuaires, etc...) et à des services interactifs (transactions, messages, enseignement) par le réseau téléphonique.

Dans le système ANTIOPE, la diffusion des informations s'effectue par une procédure dite « DIDON » (Diffusion de Données Numériques) qui est une procédure de diffusion par paquets, compatible avec la diffusion du signal de télévision.

De nombreux articles ou demandes de brevets ont déjà décrit ces systèmes, notamment le système ANTIOPE dont on pourra trouver une description détaillée dans les documents suivants qui doivent être considérés comme incorporés à la présente demande :

— l'article de Y. GUINET intitulé « Etude comparative des systèmes de télétexte en radiodiffusion. Quelques avantages de la diffusion des données par paquets appliqués au télétexte » paru dans la revue de l'U.E.R. Cahier Technique, n° 165, octobre 1977, pages 242 à 253 ;

— l'article de B. MARTI et M. MAUDUIT intitulé « ANTIOPE », service de télétexte paru dans la revue « Radiodiffusion Télévision », 9ᵉ année, N° 40, novembre-décembre 1975, 5/5, pages 18 à 23 ;

— la « Spécification du Système de télétexte « ANTIOPE », éditée par le Centre Commun d'Etudes de Télévision et Télécommunications (CCETT) ;

— la demande de brevet français FR-A-2 313 825 publiée le 31.12.76 et intitulée « Système de diffusion de données » ;

— la demande de brevet français FR-A-2 263 949 publiée le 31.3.78 et intitulée « Système de transmission numérique et d'affichage de texte sur un écran de télévision » ;

— la demande de brevet français FR-A-2 365 843 publiée le 21.4.78 et intitulée « Perfectionnement aux systèmes de transmission numérique et d'affichage de textes sur un écran de télévision » ;

— la demande de certificat d'addition français FR-A-2 393 480, publié le 29.12.1978 et intitulée « Système de diffusion de données ».

L'avènement des services de type ANTIOPE ou TITAN soulève la question de la taxation de ces services, c'est-à-dire de la mise en œuvre d'un système permettant l'identification et le contrôle des audiences. Cette question se pose d'ailleurs plus généralement pour tout service diffusé tendant à rentabiliser les réseaux de diffusion par une meilleure utilisation des ressources.

Une taxation de type à abonnement constitue une relation à la fois souple et durable entre un service et ses usagers. C'est en diffusion surtout qu'un tel mode de taxation trouve sa justification.

Une taxation de type à la consommation peut également être retenue ; ce mode de taxation est fondamental pour les systèmes « interactifs » (dans lesquels un dialogue s'instaure entre l'abonné et la source d'information, comme c'est le cas pour TITAN) ; mais il reste secondaire dans les systèmes à diffusion (dans lesquels les informations sont transmises de manière unidirectionnelle vers des abonnés, comme c'est le cas pour ANTIOPE).

Des systèmes intermédiaires, dits « quasi interactifs » peuvent se présenter, dans lesquels on modifie sans cesse le contenu de la source de diffusion pour satisfaire aux requêtes des usagers qui sont transmises par un réseau public de données. L'avènement des nouveaux moyens de diffusion à très grande capacité (satellites) développera beaucoup ce mode quasi interactif, rendant alors nécessaire la mise en œuvre d'un système de contrôle de l'accès à l'information offerte.

Ce problème du contrôle d'accès pose avant tout celui du verrouillage de l'information à l'émission et du déverrouillage à la réception. Ce problème doit naturellement être résolu en tenant compte de la spécificité du système de télétexte à contrôler. En particulier, la méthode de brouillage des informations et celle de recouvrement de l'intelligibilité des informations, ne doit pas pénaliser les performances du système.

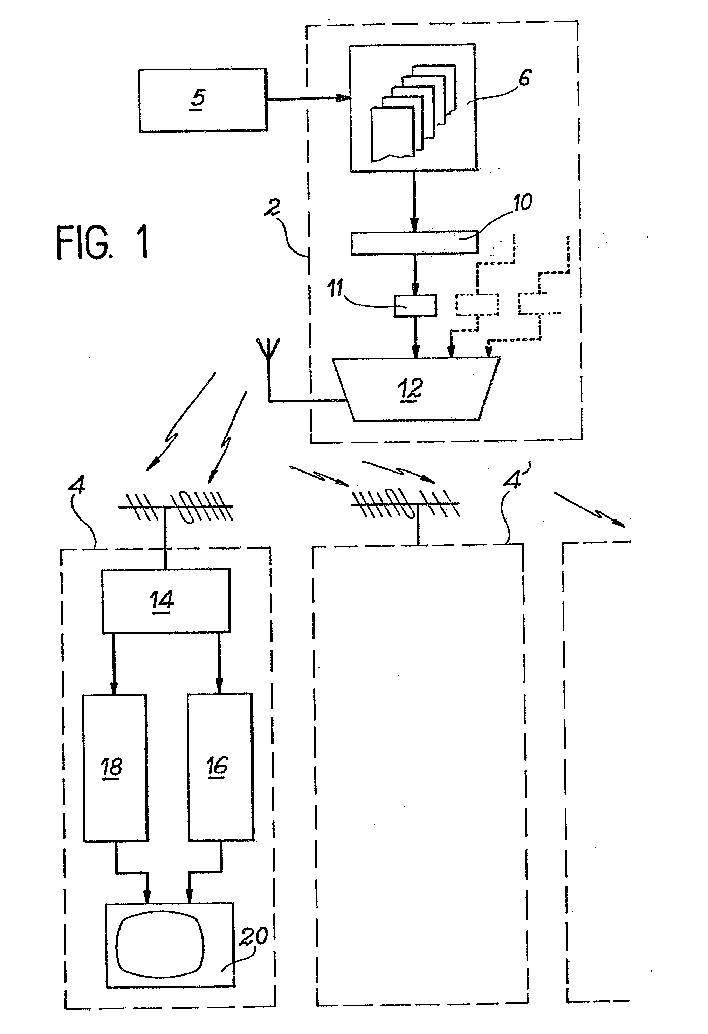

Un système apte à verrouiller l'information à l'émission et à la déverrouiller à la réception est représenté sur la figure 1.

Ce système comprend tout d'abord des éléments connus caractéristiques du système de vidéotex ANTIOPE, à savoir un centre d'émission 2 et des postes récepteurs 4.

Le centre d'émission reçoit des informations d'une ou de plusieurs sources 5 et il comprend :

— un moyen 6 de composition d'un magazine constitué de pages organisées en rangées de caractères, si ce moyen n'est pas déjà dans la source d'information ;

— un circuit 10 de mémorisation du magazine sous forme de signaux numériques groupés en octets (8 éléments binaires),

## 0 014 654

— une jonction 11 reliée au circuit 10,

— un multiplexeur 12 de diffusion servant à l'insertion des informations dans les lignes d'un signal de télévision, ce moyen mettant en œuvre la procédure DIDON évoquée plus haut.

Chaque poste récepteur comprend :

— un circuit 14 de réception et de démodulation dudit signal de télévision,

— une voie 16 de traitement des signaux vidéo d'image,

— une voie 18 de traitement des signaux numériques, cette voie comprenant notamment un décodeur de données numériques, et enfin,

— un organe 20 de visualisation.

Dans ce genre de système, les signaux numériques transmis sont groupés sous forme d'octets, qui se divisent en octets de commande et en octets de données. Les octets de commande indiquent notamment des en-têtes et des fins de pages ainsi que des en-têtes et les fins de rangées. Les octets de données, insérés entre des octets de commande correspondent à des caractères contenus dans les rangées. Tous ces octets, qu'ils soient de commande ou de données, comprennent un élément binaire de poids fort qui est un élément d'imparité. Les octets dont les 6$^e$ et 7$^e$ éléments binaires sont nuls sont des octets de commande et ils jouent un rôle particulier dans le système qui fait l'objet de la demande citée plus haut.

Le système décrit dans cette demande comprend en outre :

A) dans le centre d'émission 2 :

a) un générateur 22 délivrant un signal numérique représentant une clé de service K, cette clé changeant de manière aléatoire à des intervalles déterminés qui sont par exemple de l'ordre de quelques minutes ;

b) un automate de verrouillage 24 comprenant :

i) un comparateur 28 à une entrée reliée au circuit 10 de mémorisation du magazine d'où il reçoit des octets clairs ; ce comparateur est apte à distinguer, parmi ces octets clairs, ceux dont les 7$^e$ et 6$^e$ éléments binaires sont nuls ; ce comparateur possède deux sorties 31 et 32, la première véhiculant ces octets à 7$^e$ et 6$^e$ éléments binaires nuls et qui est reliée au multiplexeur 12 de diffusion (à travers une jonction 11'), et la seconde véhiculant les octets clairs dj dont les 7$^e$ et 6$^e$ éléments binaires ne sont pas nuls ;

ii) un circuit logique 34 de type OU-exclusif à deux entrées, l'une reliée à la deuxième sortie 32 du comparateur 28 d'où elle reçoit les octets clairs dj à 6$^e$ et 7$^e$ éléments binaires non nuls ; ce circuit logique possède une sortie qui véhicule des octets chiffrés impairs Dj, les octets chiffrés étant dirigés ensuite (à travers la jonction 11') vers le multiplexeur de diffusion 12 ;

c) un générateur 26 d'octets chiffrants Cj, commandé par l'automate 24 d'où il reçoit des octets indiquant les numéros de page et les numéros de rangées des données à transmettre et le signal correspondant à la clé de service K ; ce générateur d'octets 26 délivre, pour chaque octet de donnée dj d'une rangée visualisable, un octet chiffrant Cj, cet octet possédant un 8$^e$ élément binaire de parité et des 7$^e$ et 6$^e$ éléments binaires nuls, cet octet étant appliqué à la seconde entrée de la porte 34.

B) dans chaque poste récepteur 4 :

d) un circuit 36 délivrant un signal numérique représentant la clé de service K en cours dans le poste d'émission,

e) un automate de déverrouillage 38 comprenant :

i) un comparateur 42 à une entrée recevant les octets chiffrés ; ce comparateur est apte à distinguer, parmi ces octets chiffrés, ceux dont les 7$^e$ et 6$^e$ éléments binaires sont nuls, ce comparateur ayant deux sorties 43 et 44, la première véhiculant ces octets dont les 7$^e$ et 6$^e$ éléments binaires sont nuls, cette première sortie étant reliée à l'organe de visualisation 20, la seconde véhiculant les octets chiffrés Dj dont les 7$^e$ et/ou 6$^e$ éléments binaires ne sont pas nuls,

ii) un circuit logique 46 de type OU-exclusif à deux entrées, l'une reliée à la sortie 44 du comparateur d'où elle reçoit les octets chiffrés Dj, ce circuit logique ayant une sortie qui véhicule des octets déchiffrés dj qui sont ensuite dirigés vers l'organe de visualisation 20.

f) un générateur d'octets déchiffrants, commandés, par l'automate de déverrouillage d'où il reçoit les octets indiquant les numéros de page, les numéros de rangées des données transmises, et le signal correspondant à la clé de service en cours K ; ce générateur d'octets déchiffrants possède une sortie 41 qui délivre, pour chaque octet chiffré reçu, un octet déchiffrant Cj possédant un élément binaire de poids fort qui est forcé à zéro et des 7$^e$ et 6$^e$ éléments binaires nuls, ces octets étant appliqués à la seconde entrée de la porte 46.

De tels moyens de verrouillage et de déverrouillage permettent de résoudre de manière avantageuse le problème de la taxation évoqué plus haut. A cette fin, l'invention objet de la demande citée propose d'utiliser, en plus de la clé de service, dont le rôle vient d'être défini, des clés d'abonnement qui sont engendrées de manière aléatoire par un centre de gestion des taxations. Ces clés ont une durée de vie relativement longue (de 1 à 12 mois), par rapport à celle de la clé de service (qui est de l'ordre de quelques minutes).

Pour illustrer le fonctionnement de ce système à double clé, on peut prendre un exemple de schéma d'abonnement qui utiliserait quatre types d'abonnements : 1 mois, 3 mois, 6 mois et un an. En plus de sa

3

durée, un abonnement est caractérisé par son mois de début. Avec un tel schéma, durant un mois donné et pour un service donné, il y a donc 22 clés d'abonnement susceptibles d'être utilisées par les usagers ; une clé mensuelle, trois clés trimestrielles, six clés semestrielles et douze clés annuelles.

Chaque mois, le centre de gestion des taxations fournit à chaque centre de diffusion une liste de 22 clés d'abonnement en cours pour chaque service diffusé par ce centre. En outre, il fournit à des points de vente d'abonnements, une autre liste de 4 clés qui vont débuter le mois suivant (un mois, trois mois, six mois et un an), pour chaque service, avec les tarifs des abonnements.

Une machine appropriée, installée dans chaque point de vente, inscrit certaines de ces clés sous forme de blocs d'abonnements sur des supports prévus à cet effet (par exemple des cartes intelligentes de type « carte de crédit »). Ces cartes sont ensuite introduites par les usagers du service dans leur poste récepteur.

Pour chaque service payant, toutes les cinq minutes environ, une nouvelle clé du service K est engendrée au hasard, par chaque centre de diffusion intéressé. Ainsi, au cours d'une session d'un service (une heure ou quelques heures), quelques dizaines de clés du service peuvent se succéder.

Dès qu'un centre de diffusion engendre une nouvelle clé de service K, il calcule, pour chaque clé d'abonnement en cours $C_i$ pour ce service, un message $M_i$ par un algorithme paramétré $M_i = F_{C_i} (K)$, les clés $C_i$ jouant le rôle de paramètres.

Ainsi, pour un service doté du schéma d'abonnement indiqué plus haut, à tout instant, 22 messages différents sont en vigueur. La durée de vie d'un message est égale à celle de la clé du service K, et pour un service donné, à tout instant, il existe autant de messages qu'il y a de clés d'abonnement en cours.

L'ensemble des messages $M_i$ en vigueur constitue l'information de contrôle d'accès associée au service diffusé. Cette information de contrôle d'accès n'est évidemment pas verrouillée par la serrure électronique.

Ces moyens de contrôle d'accès à l'information sont représentés sur la figure 1. Ils comprennent :

A) un centre de gestion d'abonnements 100, qui engendre des signaux numériques correspondant aux clés d'abonnement $C_1$, ces clés changeant de manière aléatoire à intervalles longs de l'ordre du mois et selon les schémas analogues à celui qui a été indiqué plus haut à titre d'exemple :

B) dans le centre d'émission ;

— un circuit 102 de formation de messages $M_i$ qui reçoit du circuit 100 les signaux correspondant auxdites clés d'abonnement $C_i$ et du générateur 22 le signal correspondant à la clé de service K. Ces messages sont obtenus à l'aide d'un algorithme $F_{C_i} (K)$ paramétré par les $C_i$. Le circuit 102 délivre autant de messages $M_i$ qu'il y a de clés d'abonnement $C_i$, ces messages changeant avec la clé de service K. L'ensemble de ces messages est organisé en une page spéciale 104 dite page de contrôle d'accès. Cette page est transmise cycliquement par le multiplexeur 12, mais n'est pas visualisable ;

C) dans chaque poste récepteur :

i) un support d'abonnement 106 qui contient une mémoire 108 dans laquelle est inscrit au moins un bloc d'abonnement représentant l'une des clés d'abonnement $C_i$ ;

j) un circuit 110 de restitution de la clé de service K, relié, d'une part, au circuit 18 d'où il reçoit un message $M_i$ extrait de la page de contrôle d'accès et sélectionné grâce à l'indice d'abonnement et, d'autre part, à la mémoire 108 du support d'abonnement d'où il reçoit la clé d'abonnement $C_i$. Ce circuit 110 développe un algorithme $K = G_{C_i} (M_i)$ qui permet de restituer le signal correspondant à la clé de service K employée dans le poste d'émission ;

D) au moins un poste de chargement 112 relié au centre de gestion d'abonnement 100 d'où il reçoit les signaux correspondant aux différentes clés d'abonnement $c_i$ engendrées par ce centre ; chacun de ces postes est apte à recevoir temporairement des supports d'abonnement et à inscrire dans leur mémoire 108 l'une des clés d'abonnement $C_i$.

La présente invention a justement pour objet un mode particulier de réalisation d'un support d'abonnement tel que l'ensemble 36 de la figure 1.

La carte de l'invention est du genre des cartes de crédit utilisées dans le domaine du commerce et de la banque et, à ce titre, elle comprend des éléments connus tels que support, interface, circuits de traitement de l'information etc... comme décrit par exemple dans le document FR-A-2 311 360. Mais elle contient des moyens complémentaires qui la rendent apte à remplir une fonction nouvelle dans un système de contrôle d'accès à l'information tel qu'il vient d'être décrit. Cette fonction est essentiellement de permettre l'ouverture de la serrure électronique au niveau des postes récepteurs de vidéographie.

De façon plus précise, la présente invention a pour objet une carte d'abonnement pour récepteurs de vidéographie conforme à l'actuelle revendication 1.

De toute façon, les caractéristiques et avantages de l'invention apparaîtront mieux après la description qui suit, d'exemples de réalisation donnés à titre explicatif et nullement limitatif. Cette description se réfère à des dessins sur lesquels :

la figure 1 déjà décrite, illustre un système de vidéotex muni de moyens de contrôle de l'accès à l'information,

la figure 2 illustre le schéma synoptique des circuits de la carte de l'invention,

la figure 3 est un diagramme illustrant le fonctionnement de la carte,

la figure 4 représente schématiquement un poste de chargement de cartes d'abonnement.

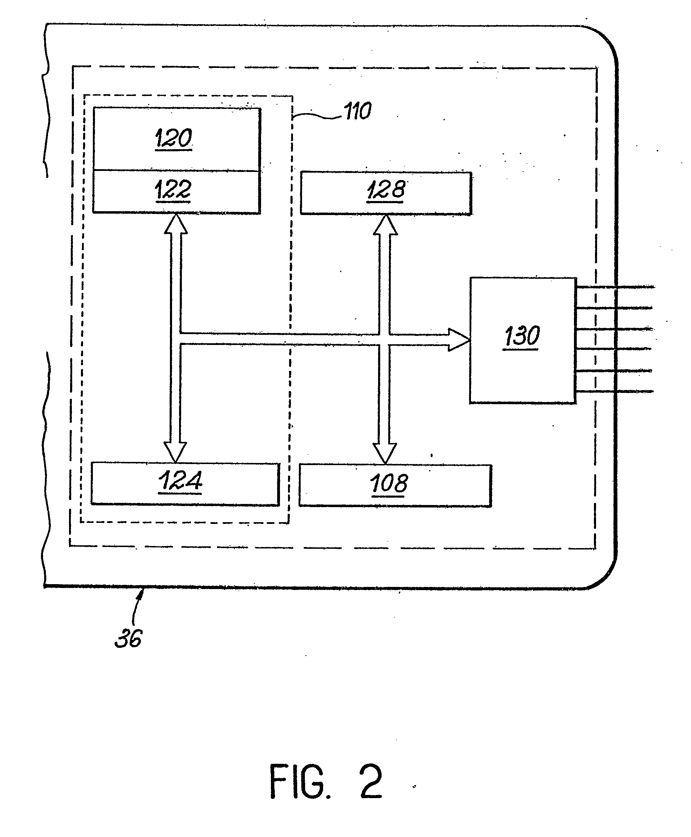

La carte représentée sur la figure 2 comprend, sur un support 36 :

4

— Une unité arithmétique et logique 120 gérée par une unité de contrôle 122, l'ensemble constituant une unité centrale capable d'effectuer :

des opérations arithmétiques et logiques : addition, décalage, comparaison, « ET logique », « OU-exclusif »,

des branchements logiques conditionnels,

des comptages d'événements

— Une mémoire des programmes 124 de type ROM (Read Only Memory) contenant les instructions décrivant les phases de fonctionnement (enregistrement, sélection, calcul), l'ensemble 120/122/124 constituant le circuit 110 ;

— Une mémoire d'abonnement 108 de type PROM (Programmable Read Only Memory) pour accueillir des blocs d'abonnements,

— Une mémoire de travail 128 de type RAM (Random Access Memory) pour stocker les résultats intermédiaires des calculs,

— Un interface de communication 130 avec l'extérieur, gérant un connecteur à au moins 6 contacts (remise à zéro, masse, entrées/sorties, alimentations, horloge, extension) qui permet les échanges entre la carte et la machine de validation des abonnements d'une part, et entre la carte et le récepteur des usagers d'autre part.

L'ensemble de ces éléments peut être rassemblé dans un circuit intégré monolithique. L'ensemble de ces éléments forme le moyen 36 de la figure 1.

La mémoire d'abonnement 108 est organisée en blocs de 21 octets, chacun pouvant recevoir un bloc d'abonnement.

Ainsi, une PROM de 4 096 éléments binaires est susceptible de contenir jusqu'à 24 blocs d'abonnement.

Les emplacements occupés sur la carte sont repérés par des fanions d'occupation. Une carte d'abonnement est saturée quand tous les fanions sont affichés.

Le fonctionnement de cette carte est caractérisé par trois phases : enregistrement, sélection et calcul.

A) La phase d'enregistrement commence par la localisation du premier fanion non affiché, c'est-à-dire du premier emplacement libre dans la mémoire 108 ; ensuite, sous le contrôle du poste de chargement, l'unité centrale de la carte supervise l'écriture du bloc d'abonnement demandé par l'usager.

Un bloc d'abonnement est composé par exemple de quatre champs :

1) un « code de service » de 16 éléments binaires qui désigne le service considéré,

2) un « indice d'abonnement » de 8 éléments binaires qui caractérise un abonnement pour un service considéré. Deux de ces éléments binaires indiquent le type d'abonnement (1, 3, 6 ou 12 mois) et les six autres indiquent le mois de début d'abonnement (1 à 60 modulo 5 ans),

3) une « clé d'abonnement » de 128 éléments binaires qui est l'information fondamentale du bloc,

4) un « code de redondance cyclique » de 16 éléments binaires qui porte sur les 152 éléments binaires précédents et permet de vérifier le bloc d'abonnement avant d'en faire usage.

Un bloc d'abonnement est donc composé de 168 éléments binaires, soit 21 octets.

La phase d'enregistrement n'est qu'une étape de l'opération globale d'abonnement. En effet, il faut commencer par vérifier le bon fonctionnement de la carte à l'aide d'un bloc d'abonnement de test inséré à la création du circuit. Ce bloc d'abonnement de test authentifie au passage la carte.

De plus, après la phase d'enregistrement, il faut vérifier le bon déroulement de l'opération. Comme on ne peut pas relire ce que l'on vient d'écrire, il faut donc tester à nouveau en utilisant le nouveau bloc inscrit.

B) La phase de sélection consiste à tester les blocs d'abonnement pour en localiser un qui corresponde à un code de service indiqué par le récepteur à partir de l'adresse indiquée, la réponse consistant à fournir l'indice d'abonnement et l'adresse du bloc localisé.

La phase de sélection commence donc par la fourniture par le récepteur, d'un code de service. L'unité de contrôle de la carte recherche alors dans la mémoire d'abonnement le premier bloc affecté de ce code. Quand elle en trouve un, elle le vérifie à l'aide du code de redondance cyclique. En l'absence d'incident, la carte répond au récepteur en lui fournissant l'indice d'abonnement du bloc trouvé.

Les incidents peuvent être : « le code de redondance cyclique est mauvais », et « il n'y a pas d'abonnement convenable sur cette carte ». Ces deux incidents sont signalés au récepteur par des indications anormales, par exemple $1^8$ et $0^8$, indications formées de 8 éléments binaires à 1 ou à 0.

La phase de sélection joue donc un double rôle : sélection proprement dite et vérification du bloc d'abonnement considéré.

C) La phase de calcul consiste à calculer la clé du service (K) à partir du message transmis par le récepteur et de la clé d'abonnement trouvée dans la mémoire de la carte. En d'autres termes, le récepteur ayant localisé le message adéquat dans la page de contrôle d'accès, il fournit ce message à la carte qui a elle-même repéré le bloc d'abonnement convenable.

Cette phase de calcul se reproduit chaque fois que la page de contrôle d'accès est remise à jour, tant que l'usager ne se déconnecte pas du service considéré.

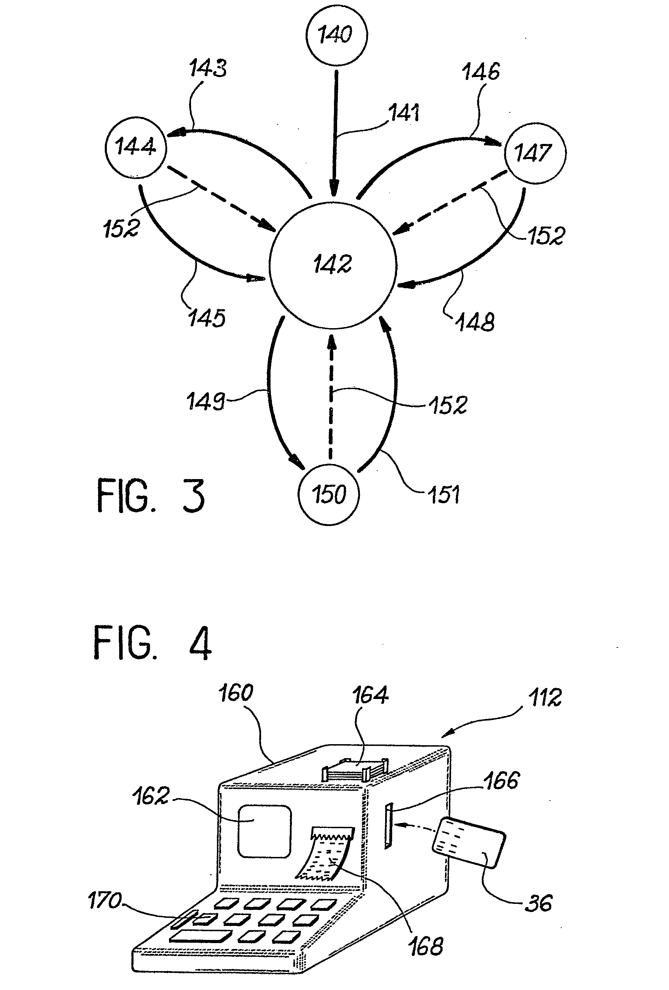

Le diagramme de la figure 3 illustre les différents états et transitions entre états de l'automate

5

constitué par les circuits de la carte. La signification des symboles repérés par des références est la suivante :

140 — état de repos
141 — mise sous tension
142 — état de sommeil
143 — ordre d'enregistrement à une adresse
144 — enregistrement d'un bloc d'abonnement
145 — acquittement
146 — ordre de sélection d'un service à partir d'une adresse
147 — sélection et test du bloc
148 — fourniture de l'indice d'abonnement et de son adresse
149 — ordre de calcul du message à l'aide du bloc figurant à l'adresse indiquée
150 — calcul de la clé de service
151 — fourniture de la clé de service
152 — remise à zéro.

L'intérêt de cette procédure est d'éviter toute mémorisation vive des opérations précédentes au niveau de la carte, et donc de fermer le système opératoire.

L'automate n'a pas de mémoire, ce qui évite bien des cas de conflit et d'erreur. De plus, la carte devient sourde pendant l'exécution d'un ordre jusqu'à ce qu'elle donne une réponse.

On va décrire maintenant un exemple de calcul que peut effectuer la carte de l'invention. Mais, auparavant, il faut décrire l'algorithme qui permet de calculer les messages dans le centre d'émission du système de vidéotex à partir d'une clé de service et de blocs d'abonnements.

Le calcul des messages à partir des clés d'abonnement $C_i$ et de la clé K est effectué dans le centre d'émission par le circuit 102 qui est organisé autour d'un microprocesseur. Ce circuit est programmé pour mettre en œuvre un algorithme qui s'appuie sur deux corps de Galois ayant pour caractéristiques les nombres premiers de Mersenne $2^{61}$-1 et $2^{127}$-1. Cet algorithme utilise les clés d'abonnement $C_i$ (128 éléments binaires) et une clé de service K de 56 éléments binaires, de la manière suivante :

1. on forme un mot $\pi$ de redondance de confusion qui comprend 61 éléments binaires engendrés au hasard à chaque mise en œuvre de l'algorithme ;

2. on calcule $\pi^{-1}$, inverse de $\pi$ modulo $2^{61}$-1 par un programme arithmétique utilisant une variante de l'algorithme d'Euclide :

3. on effectue une première multiplication par un autre programme arithmétique : $v = K \cdot \mu^{-1}$ modulo ($2^{61}$-1) ;

4. on calcule $\gamma$, inverse de C modulo $2^{127}$-1, par un programme similaire à celui de 2. ;

5. enfin, on calcule le message par un programme similaire à 3. ; $M = \gamma \cdot (v + 2^{64} \cdot \pi)$ modulo ($2^{127}$-1).

Les messages ayant été formés de cette manière, l'algorithme à dérouler dans la carte pour restituer la clé de service K à partir d'un message $M_i$ et d'une clé d'abonnement $C_i$ est le suivant :

1) Le message $M_i$ (127 éléments binaires utiles) est saisi octet par octet et une multiplication par $C_i$ est effectuée sur le premier corps CG ($2^{127}$-1). On forme ainsi un mot $\mu$ :

$$\mu = M \cdot C \text{ modulo } (2^{127}\text{-1})$$

D'après la construction de M à l'émission, les éléments binaires 1 à 61 de $\mu$ représentent le mot $v$, tandis que les éléments binaires 65 à 125 représentent le mot $\pi$. Bien entendu, les éléments binaires 62, 63, 64, 126 et 127 doivent être nuls. S'ils ne le sont pas, on met le mot $v$ à zéro avant de continuer le calcul.

2) $\pi$ et $v$ sont multipliés sur le deuxième corps CG ($2^{61}$-1), ce qui fait disparaître la redondance de confusion et l'on obtient $K = v \cdot \pi$ modulo ($2^{61}$-1).

Un nouveau test de vraisemblance intervient ici puisque K ayant 56 éléments binaires utiles, les éléments 57, 58, 59, 60 et 61 doivent être nuls. Dans ce cas contraire K mis à zéro avant la poursuite des opérations.

3) Les 56 éléments binaires utiles de K sont alors disponibles sous forme de huit octets impairs.

La figure 4 représente schématiquement un poste de chargement pour les cartes qui viennent d'être décrites. Ce poste comprend extérieurement :

— un coffret 160 contenant un écran de visualisation 162, un logement 164 pour les cartes neuves, une fente 166 pour l'introduction des cartes à charger, une sortie 168 pour un reçu imprimé,

— un clavier 170 pour la commande des opérations à effectuer.

Ce poste comprend, à l'intérieur du coffret 160 :

— un interface apte à être couplé à l'interface des cartes introduites,

— une mémoire contenant la liste des blocs d'abonnement à vendre avec les tarifs correspondants,

— un circuit de chargement de l'abonnement désiré par l'usager dans la carte introduite. Ce circuit est apte à localiser un emplacement vide dans la mémoire programmable de cette carte et à y inscrire le bloc d'abonnement composé d'une clé d'abonnement, d'un indice d'abonnement, d'un code de service et enfin d'un code de redondance cyclique.

**0 014 654**

De préférence, le poste de chargement contient un message et une clé de test pour vérifier l'authenticité des cartes introduites, à l'aide de l'abonnement de test qu'elles contiennent à cet effet. Un tel poste de chargement est en relation avec le centre de gestion des abonnements, comme indiqué sur la figure 1 : il reçoit de ce centre des listes de blocs d'abonnement à vendre ainsi que des tarifs, et il fournit en retour des enregistrements des transactions et le montant des taxes prélevées.

Le relevé des transactions permet ensuite de préciser l'audience de chaque service et de répartir au mieux les flux monétaires provenant des abonnements. Le reçu est utile en cas de contestation sur la carte.

La description qui précède met l'accent sur le système ANTIOPE mais l'invention peut s'appliquer à d'autres systèmes fonctionnant sur abonnement (TITAN, EPEOS, etc...).

**Revendications**

1. Carte d'abonnement pour système de vidéographie, cette carte comprenant :
   a) un support (36) et, dans ce support,
   b) un interface permettant des échanges de signaux numériques entre la carte et un appareil extérieur dans lequel cette carte est introduite,
   c) une mémoire programmable (108)
   d) des moyens de traitement numérique,
caractérisée en ce que :
   e) la mémoire programmable (108) est organisée en plusieurs blocs de mémorisation, chaque bloc pouvant recevoir un bloc d'octets, un tel bloc d'octets constituant un bloc d'abonnement dans lequel une partie des octets constitue une clé d'abonnement ($C_i$) et une autre partie un code de service,
   f) les moyens de traitement numérique comprennent une unité arithmétique et logique (120) gérée par une unité de contrôle (122) et une mémoire vive (128),
   g) une mémoire d'instructions (124) contenant des instructions décrivant trois phases de fonctionnement :
      i) une phase d'enregistrement correspondant au cas où la carte est introduite dans un poste de chargement, ce poste fournissant lesdits blocs d'abonnement, les instructions correspondant à cette phase étant aptes à commander la recherche dans la mémoire programmable (108) d'emplacements libres dans les blocs de mémorisation et à commander l'écriture à ces emplacements desdits blocs d'abonnement,
      ii) une phase de sélection, correspondant au cas où la carte est introduite dans un récepteur de vidéographie, ce récepteur fournissant un code de service, les instructions correspondant à cette phase étant aptes à commander la recherche dans la mémoire programmable (108) de la clé d'abonnement particulière ($C_i$) qui correspond au code de service fourni par le récepteur, et à commander la sélection de cette clé d'abonnement particulière ($C_i$),
      iii) une phase de calcul, la carte étant toujours dans le récepteur, les instructions correspondant à cette phase étant aptes à commander la réception de messages $M_i$ provenant du récepteur et à commander lesdits moyens de traitement numérique pour effectuer un calcul combinant les octets de la clé ($C_i$) sélectionnée dans la phase précédente avec les octets du message reçu ($M_i$) et à commander la transmission au récepteur, à travers l'interface, du signal formant le résultat de ce calcul et représentant une clé de service (K).

2. Carte d'abonnement selon la revendication 1, caractérisée en ce que lesdits moyens de traitement numérique sont aptes à effectuer un calcul qui comprend les opérations suivantes :
   — multiplication du message ($M_i$) par la clé d'abonnement sélectionnée ($C_i$) ce qui fournit un mot $\mu$,
   — séparation du mot $\mu$ en deux mots $\nu$ et $\pi$ constitués respectivement par les premiers et les derniers éléments binaires du mot $\mu$,
   — multiplication de $\nu$ par $\pi$.

**Claims**

1. Subscription card for a videotext system, which card comprises :
   a) a support (36), within which are
   b) an interface permitting exchanges of digital signals between the card and a separate apparatus into which the card is introducible,
   c) a programmable memory (108), and
   d) digital processing means,
characterized in that :
   e) the programmable memory (108) is organized into a plurality of memory blocks, each block being adapted to receive a block of octets, one such block of octets constituting a payment block in which one portion of the octets constitute a payment key ($C_i$) and another part constitutes a service code,
   f) the digital processing means comprise an arithmetic-logic unit (120) governed by a control unit (122) and a working memory (128), and

7

g) an instruction memory (124) contains instructions for three phases of functioning :

i) a registration phase corresponding to the case where the card is introduced into a loading station, said station providing the payment blocks, the instructions corresponding to said phase being adapted to command a search within the programmable memory (108) for empty locations within the memory blocks, and to command writing of the payment blocks in said empty locations,

ii) a selection phase, corresponding to a condition where the card is introduced into a videotext receiver, said receiver providing a service code, the instructions corresponding to said phase being adapted to command a search within the programmable memory (108) for the particular payment key ($C_i$) corresponding to the service code provided by the receiver, and to command the selection of said particular payment key ($C_i$), and

iii) a calculation phase, the card remaining within the receiver, the instructions corresponding to said phase being adapted to command reception of messages $M_i$ provided by the receiver and to command the digital processing means to perform a calculation combining the octets of the key ($C_i$) selected in the preceding phase with the octets of the received message ($M_i$), and to command transmission to the receiver, across the interface, of a signal formed by the result of the calculation and representing a service key (K).

2. Subscription card according to claim 1, characterized in that said digital processing means are adapted to perform a calculation comprising the following operations :

— multiplication of the message ($M_i$) by the selected payment key ($C_i$) to provide a word $\mu$,

— separation of the word $\mu$ into two words $\nu$ and $\pi$ constituted respectively by the first and last binary elements of the word $\mu$, and

— multiplication of $\nu$ by $\pi$.

## Ansprüche

1. Abonnementkarte für ein Videotex-System wobei diese Karte umfaßt :

a) einen Träger (36) und in diesem Träger,

b) eine Schnittstelleneinrichtung, die den Austausch von numerischen Signalen zwischen der Karte und einem äußeren Gerät ermöglicht, in welches diese Karte eingeführt ist,

c) einen programmierbaren Speicher (108),

d) Mittel zum numerischen Verarbeiten, dadurch gekennzeichnet, daß

e) der programmierbare Speicher (108) zu mehreren Blöcken zum Speichern geordnet ist, wobei jeder Block einen Block von Oktetten empfangen kann und ein solcher Block von Oktetten einen Abonnementblock bildet, indem ein Teil der Oktette einen Abonnementschlüssel ($C_i$) und ein anderer Teil einen Dienstleistungscode darstellt,

f) die Mittel zum numerischen Verarbeiten eine von einer Steuereinheit (122) gesteuerte, arithmetische und logische Einheit (120) und einen Arbeitsspeicher (128) umfassen,

g) ein Befehlsspeicher (124) Befehle enthält, die drei Arbeitsphasen beschreiben :

i) eine Registrierungsphase, die dem Fall entspricht, bei dem die Karte in ein Ladegerät eingeführt ist, wobei dieses Gerät die Abonnementblöcke liefert, und wobei die dieser Phase entsprechenden Befehle die Suche in dem programmierbaren Speicher (108) nach freien Stellen in den Blöcken zum Speichern und das Einschreiben der Abonnementblöcke in diese Stellen steuern können.

ii) eine Auswahlphase, die dem Fall entspricht, bei dem die Karte in einen Videotext-Empfänger eingeführt ist, der einen Dienstleistungscode liefert, wobei die dieser Phase entsprechenden Befehle das Suchen in dem programmierbaren Speicher (108) nach dem besonderen Abonnementschlüssel ($C_i$), welcher dem von dem Empfänger gelieferten Dienstleistungscode entspricht, und die Auswahl dieses besonderen Abonnementschlüssels ($C_i$) steuern können,

iii) eine Berechnungsphase, wobei sich die Karte fortlaufend in dem Empfänger befindet und die dieser Phase entsprechenden Befehle die Aufnahme von von dem Empfänger herkommenden Botschaften $M_i$, die Mittel zum numerischen Verarbeiten zur Durchführung einer Rechnung, die die Oktette des in der vorhergehenden Phase ausgewählten Schlüssels ($C_i$) mit den Oktetten der empfangenen Botschaft ($M_i$) kombiniert, und die Übertragung des das Ergebnis der Berechnung bildende und einen Dienstleistungsschlüssel (K) darstellende Signal durch die Schnittstelleneinrichtung hindurch zu dem Empfänger steuern können.

2. Abonnementkarte nach Anspruch 1, dadurch gekennzeichnet, daß die Mittel zum numerischen Verarbeiten eine Berechnung durchführen können, die die folgende Operationen umfaßt :

— Multiplikation der Botschaft ($M_i$) mit dem ausgewählten Abonnementschlüssel ($C_i$), was das Wort $\mu$ ergibt,

— Unterteilung des Wortes $\mu$ in zwei Wörter $\nu$ und $\pi$ die aus den ersten bzw. letzten Binärelementen des Wortes $\mu$ bestehen,

— Multiplikation von $\nu$ mit $\pi$.

FIG. 1

0 014 654

FIG. 2

FIG. 3

FIG. 4